# EUROPEAN PATENT SPECIFICATION

(11) **EP 4 306 094 B1**
(45) Date of publication and mention of the grant of the patent: **26.02.2025**
(21) Application number: 23172022.8
(22) Date of filing: 08.05.2023
(51) Int. Cl.: A61G 5/10, B60B 33/00

(54) **AUTOMATIC SPEED REDUCING WHEEL**
AUTOMATISCHES RAD ZUR GESCHWINDIGKEITSVERMINDERUNG
ROUE DE RÉDUCTION DE VITESSE AUTOMATIQUE

(30) Priority: 13.07.2022 TW 111126252
(43) Date of publication of application: 17.01.2024
(73) Proprietor: Su, Chien-Chung, Taichung City 404034 (TW)
(72) Inventor: Su, Chien-Chung, Taichung City 404034 (TW)
(74) Representative: Viering, Jentschura & Partner mbB Patent- und Rechtsanwälte

(56) References cited:
- WO-A2-2010/036952
- GB-A- 1 284 100
- US-A1- 2006 207 838
- US-A1- 2006 207 841

## Description

### BACKGROUND OF THE INVENTION

### 1. Field of the Invention:

The present invention relates to wheels, and more particularly, to a wheel automatically reducing the speed when moving downhill.

### 2. Description of the Related Art:

Taiwan has entered an aging society which increasingly needs long-term care service. In hospitals or nursing organizations, patients or elder people often face inconvenience of moving due to physical disabilities or body weakness, and they have to rely on walkers or wheelchairs for facilitate their movement and outdoor activities. Therefore, use of walkers or wheelchairs accordingly increases.

Both walkers and wheelchairs are usually provided with wheels, which roll along the ground surface. However, when the walker or wheelchair is applied to move downhill, a sudden acceleration occurs due to the sliding force, resulting in the overspeed of the wheels. In this case, the user is usually unable to immediately respond, failing to control the brake mechanism for stopping the wheel in time, such that the user easily falls, or suffers from the accidental overturn of the walker or wheelchair, which poses high risks to the weak, the elder, or the disabled with weaker controlling capability. It is desirable to resolve such issues.

WO 2010036952 A2 discloses a wheel and a brake mechanism for use with a non-motorized cart such as a shopping cart. In some examples, the wheel has a hub having a plurality of first engagement features, and the brake mechanism includes at least one second engagement feature that can be moved between an unactuated position and an actuated position. In the unactuated position, the second engagement feature does not engage any of the plurality of first engagement features on the hub, and in the actuated position, the second engagement feature operatively engages at least one of the first engagement features in order to provide a braking force that locks the wheel. A magnetically-activated trigger maintains the second engagement feature in the unactuated position. In response to a triggering magnetic field, the trigger is released and allows the second engagement feature to move from the unactuated position to the actuated position.

### SUMMARY OF THE INVENTION

For improving the issues of the conventional wheels, the present invention, based on the idea of creation through various discussions, trial sample tests, revisions, and improvements, discloses an automatic speed reducing wheel.

The present invention provides an automatic speed reducing wheel, comprising:
a wheel unit having a wheel seat, a wheel axle passing through the wheel seat, and a roller rotating about the wheel axle, the wheel seat comprising a through hole through which the wheel axle passes, the wheel axle comprising a non-circular section on one end thereof, the roller comprising a wheel frame whose outer periphery is combined with an outer wheel, the wheel frame comprising an axle bore passing through a center thereof, the wheel axle passing through the axle bore, the roller being configured to freely rotate about the wheel axle, a plurality of blockers disposed on one side of the wheel frame in adjacent to an edge thereof in a radiation shape arrangement, the plurality of blockers rotating along with the roller; and
characterized by
a speed reducing unit comprising a fixing seat and a sliding member, the fixing seat comprising a fixing bore and a sliding bore, the fixing bore mounted around the non-circular section of the wheel axle and fixed thereon, the fixing seat located on one side of the roller, the sliding member slidably disposed in the sliding bore, the sliding member comprising a sliding body, the sliding body comprising an elastic portion connected with a front end thereof, the elastic portion comprising a blocking portion connected with a front end thereof; when the roller moves downhill, the sliding bore slants downward by an inclination angle, and the sliding member slides along the sliding bore due to a gravity force, such that the blocking portion of the sliding member protrudes out of an outer side of the sliding bore to interrupt a rotation route of the blockers, whereby the blockers pass and hit the blocking portion one by one, such that a cooperation between the blocking portion and an elasticity of the elastic portion achieves a speed reducing effect.

When the roller moves downhill, the automatic speed reducing wheel of the present invention provides an automatic speed reducing function to avoid a sudden acceleration, thereby preventing the user from injury and increasing the safety of the user.

### BRIEF DESCRIPTION OF THE DRAWINGS

**Fig.** 1 is a perspective view in accordance with an embodiment of the present invention.
Fig. 2 is an exploded view of the present invention.
Fig. 3 is a perspective view of the fixing seat and the sliding member of the present invention.
Fig. 4 is a sectional view of the present invention.
Fig. 5 is a schematic view illustrating the automatic speed reducing operation when moving downhill.
Fig. 6 is another schematic view illustrating the automatic speed reducing operation when moving downhill.
Fig. 7 is a schematic view illustrating the usage of the present invention installed on a wheelchair.
**Fig. 8** is a schematic view illustrating the usage of the present invention installed on a mobility aid.
**Fig. 9** is a perspective view in accordance with another embodiment of the present invention.
**Fig. 10** is an exploded view in accordance with another embodiment of the present invention.
**Fig. 11** is a sectional view in accordance with another embodiment of the present invention.
**Fig. 12** is a schematic view illustrating the automatic speed reducing operation when moving downhill in accordance with another embodiment of the present invention.
**Fig. 13** is another schematic view illustrating the automatic speed reducing operation when moving downhill in accordance with another embodiment of the present invention.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

The following content is illustrated in conjunction with the drawings of the preferable embodiments of the present invention, so as to enable people skilled in the art of the present invention to implement the present invention according to the specification.

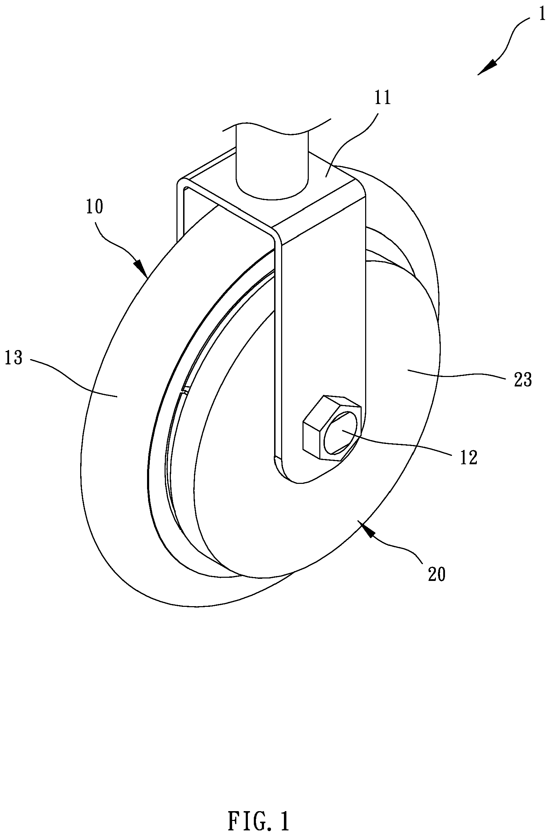

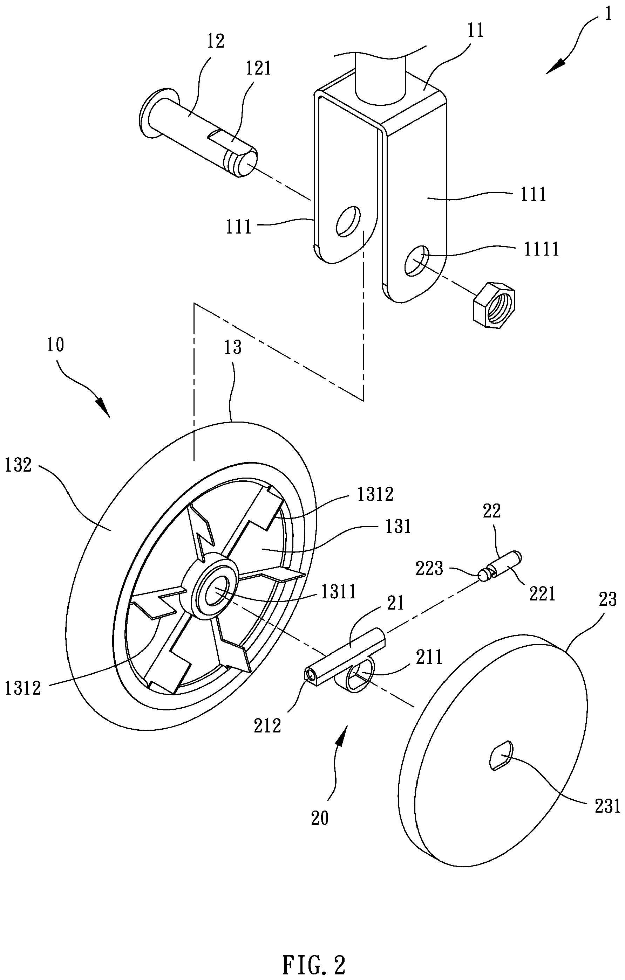

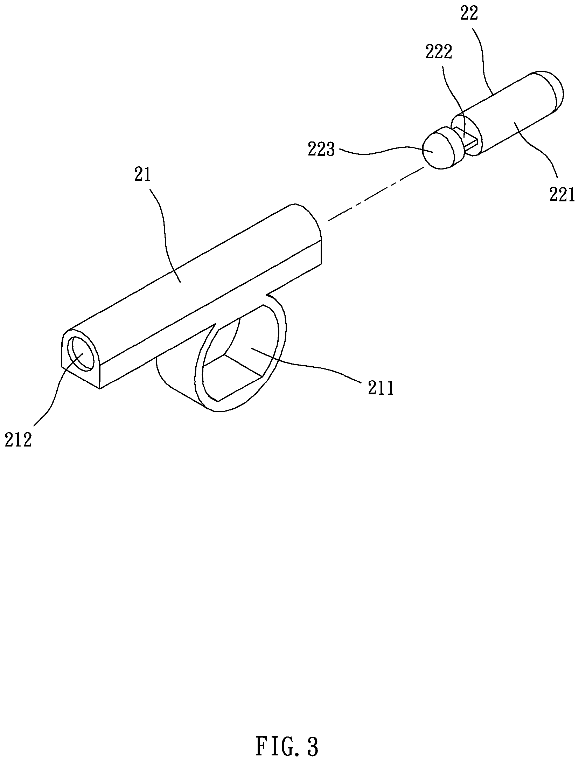

Referring to **Fig. 1** to **Fig. 4****,** an automatic speed reducing wheel 1 of the present invention comprises a wheel unit **10** and a speed reducing unit **20.**

The wheel unit **10** comprises a wheel seat **11,** a wheel axle **12** passing through the wheel seat **11,** and a roller **13** rotating about the wheel axle **12.** Two side boards **111** extend from the wheel seat **11,** and a through hole **1111** pass through the two side boards **111,** such that the wheel axle **12** passes through the through hole **1111.** The wheel axle **12** comprises a non-circular section **121** on one end thereof. The roller **13** is disposed between the two side boards **111.** The roller **13** comprises a wheel frame **131** whose outer periphery is combined with an outer wheel **132.** The wheel frame **131** comprises an axle bore **1311** passing through the center thereof. The wheel axle **12** passes through the axle bore **1311.** Therefore, the roller **13** is configured to freely rotate about the wheel axle **12.** A plurality of blockers **1312** is circularly disposed on one side of the wheel frame **131** in adjacent to an edge thereof in a radiation shape arrangement. The plurality of blockers **1312** rotates along with the roller **13.**

The speed reducing unit **20** comprises a fixing seat **21,** a sliding member **22,** and a protection cover **23.** The fixing seat **21** is disposed between the two side boards **111** and is arranged on one side of the roller **13.** The fixing seat **21** comprises a fixing bore **211** and a sliding bore **212.** The fixing bore **211** is mounted around the non-circular section **121** of the wheel axle **12** and fixed thereon. The sliding bore **212** is normally positioned in a horizontal arrangement. The sliding member **22** is slidably disposed in the sliding bore **212,** such that the sliding member **22** is able to slide along the sliding bore **212.** The sliding member **22** comprises a sliding body **221.** The sliding body **221** comprises a sheet shaped elastic portion **222** connected with a front end of the sliding body **221.** The elastic portion **222** comprises a blocking portion **223** connected with a front end of the elastic portion **222.** The protection cover **23** is disposed between the two side boards **111** of the wheel seat **11** and is arranged on one side of the roller **13.** The protection cover **23** covers the fixing seat **21** and the sliding member **22.** The protection cover **23** comprises a combination bore **231** passing through the center thereof, such that the combination bore **231** is mounted around the non-circular section **121** and fixed thereon.

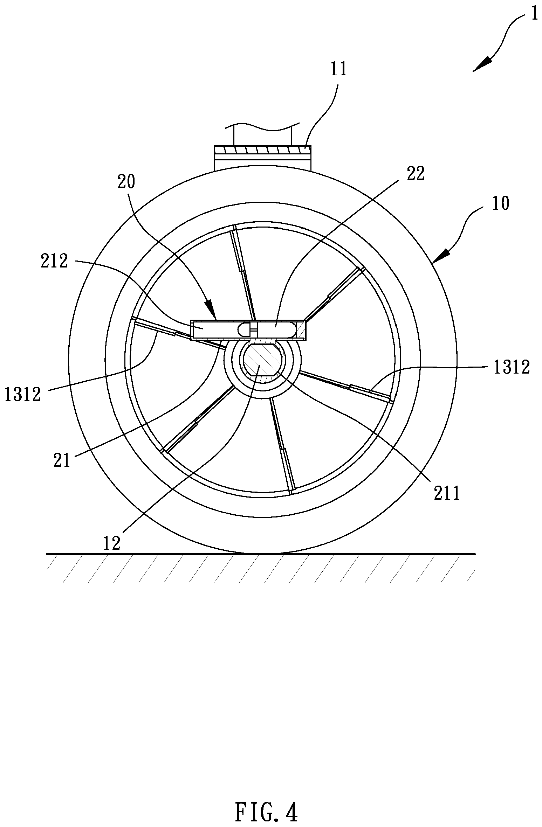

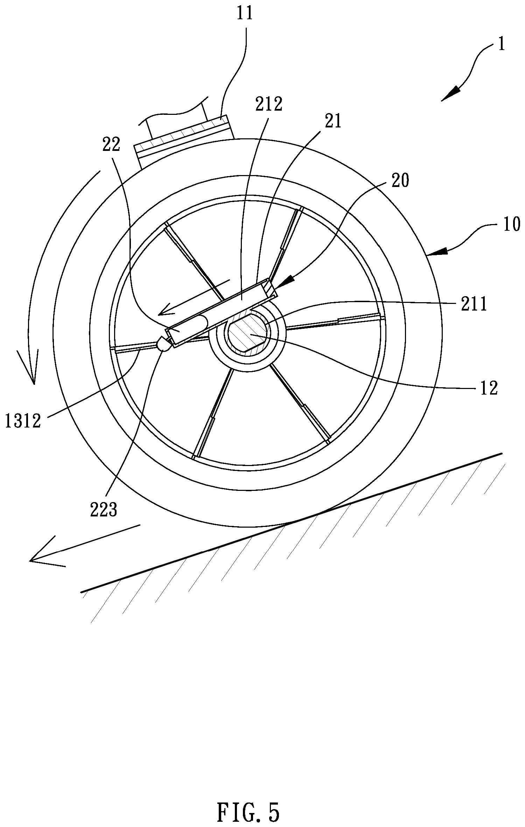

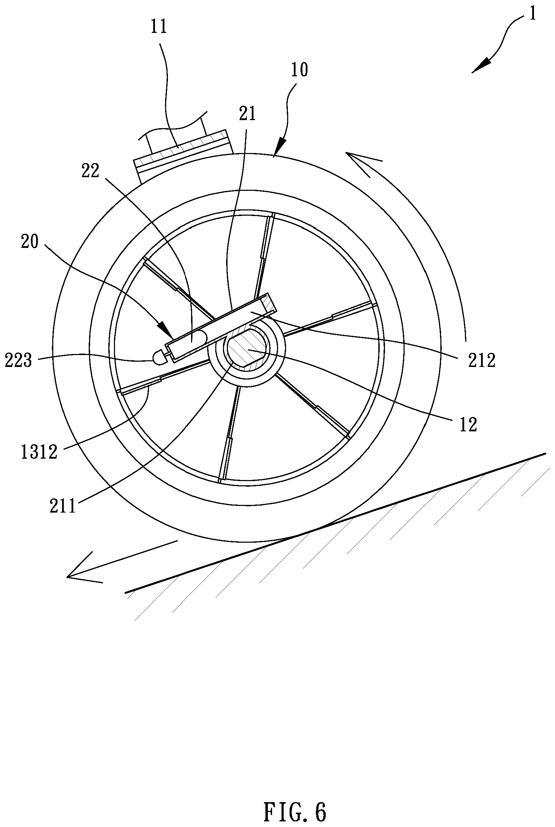

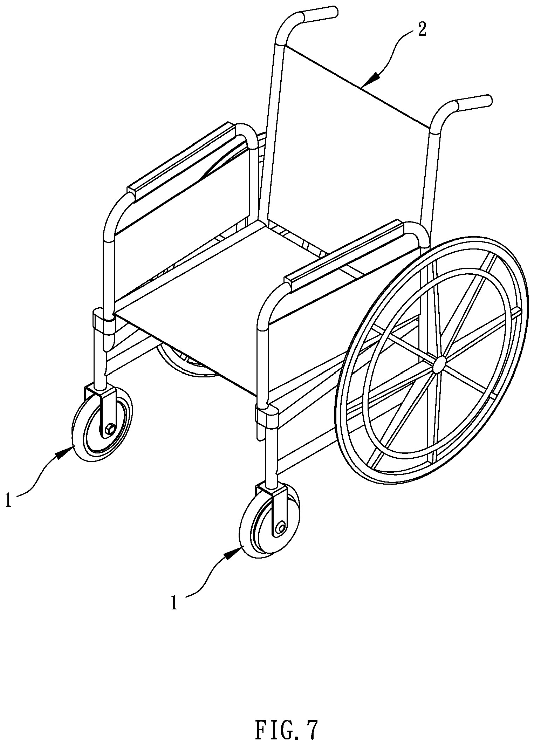

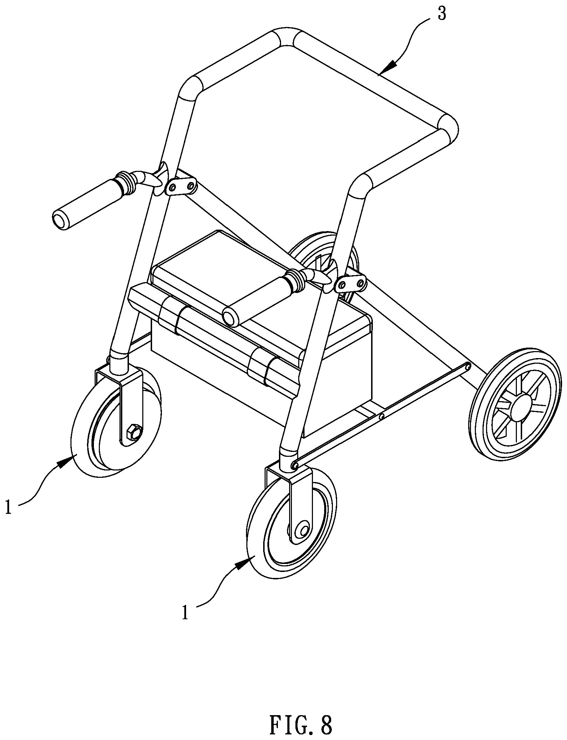

In use, the automatic speed reducing wheel **1** is able to be installed on a moving vehicle such as a wheelchair **2** (as shown by **Fig. 7****)** or a mobility aid **3** (as shown by **Fig. 8****).** When the wheelchair **2** or the mobility aid **3** move on a level ground, the blocking portion **223** of the sliding member **22** is away from the rotation route of the plurality of blockers **1312** (as shown by **Fig. 4****),** so that the wheelchair **2** or the mobility aid **3** is able to normally move. Referring to **Fig. 5** and **Fig. 6****,** when the wheelchair **2** or the mobility aid **3** moves downhill, the sliding bore **212** slants downward by an inclination angle. The sliding member **22** slides along the sliding bore **212** due to the effect of the gravity force, such that the blocking portion **223** of the sliding member **22** protrudes out of an outer side of the sliding bore **212** to interrupt the rotation route of the plurality of blockers **1312,** whereby the blocking portion **223** hinders the rotation of the blockers **1312** with the elastic deformation and resilience of the elastic portion **222,** so that the plurality of blockers **1312** passes and hits the blocking portion **223** one by one, achieving a speed reducing effect.

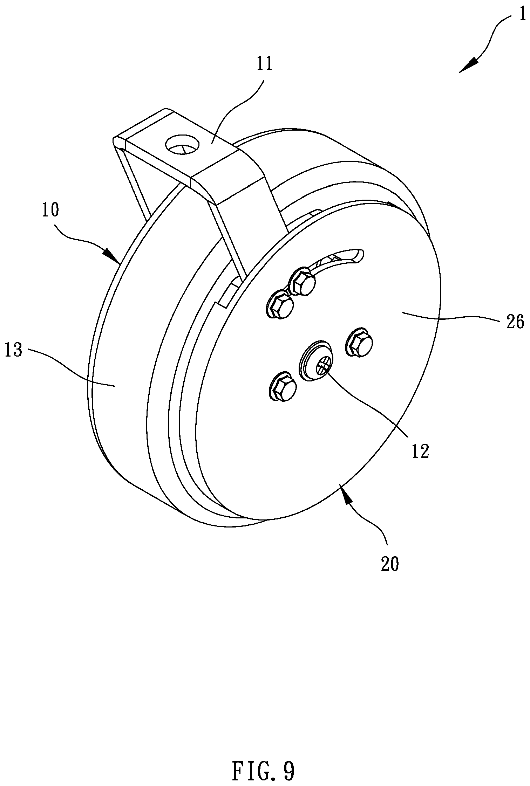

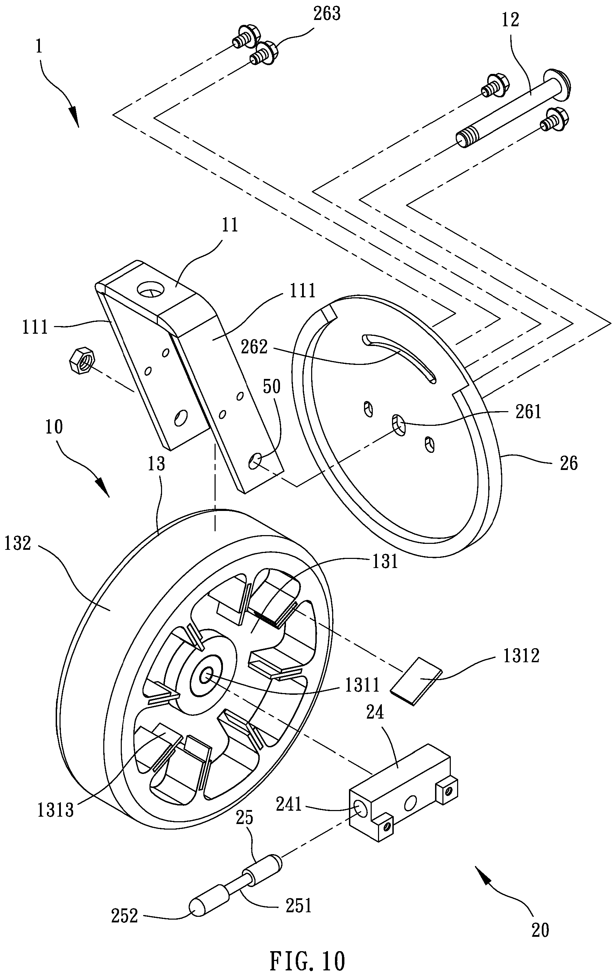

Referring to **Fig. 9** to **Fig. 11****,** the automatic speed reducing wheel **1** in accordance with another embodiment of the present invention is provided, comprising a wheel unit **10** and a speed reducing unit **20.**

The wheel unit **10** comprises a wheel seat **11,** a wheel axle **12** passing through the wheel seat **11,** and a roller **13** rotating about the wheel axle **12.** Two side boards **111** extend from the wheel seat **11,** and a through hole **1111** passes through the two side boards **111,** such that the wheel axle **12** passes through the through hole **1111.** The roller **13** is disposed between the two side boards **111.** The roller **13** comprises a wheel frame **131** whose outer periphery is combined with an outer wheel **132.** The wheel frame **131** comprises an axle bore **1311** passing through the center thereof. The wheel axle **12** passes through the axle bore **1311.** Therefore, the roller **13** is configured to freely rotate about the wheel axle **12.** A plurality of elastic blockers **1313** is circularly disposed on one side of the wheel frame **131** in adjacent to an edge thereof in a radiation shape arrangement. The plurality of elastic blockers **1313** rotates along with the roller **13.**

The speed reducing unit **20** comprises a fixing seat **24,** a sliding member **25,** and a side cover **26.** The fixing seat **24** is disposed on one side of the roller **13.** The fixing seat **24** comprises a sliding bore **241.** The sliding member **25** is slidably disposed in the sliding bore **241.** The sliding member **25** comprises a position limiting groove **251** disposed on the middle section thereof. The position limiting groove **251** allows the sliding member **25** to slide along the sliding bore **241** in a position limiting range. The sliding member **25** comprises a blocking portion **252** on the front end thereof. The side cover **26** is disposed on one side of the roller **13** and is combined with the fixing seat **24.** The side cover **26** covers the fixing seat **21** and the sliding member **22,** such that the sliding bore **241** of the fixing seat **24** is normally positioned in a horizontal arrangement. The side cover **26** comprises a through bore **261** passing through the center thereof, and the wheel axle **12** passes through the through bore **261.** The side cover **26** comprises an arc bore **262,** by which two screws **263** pass to be fastened on one of the side boards **111,** whereby the side cover **26** is connected with the wheel seat **11,** and the wheel seat **11** is able to sway with respect to the side cover **26** within the arc bore **262.** Therein, the position limiting groove **251** comprises a first end **2511** and a second end **2512.** The position limiting range is the interval range between the first end **2511** and the second end **2512.**

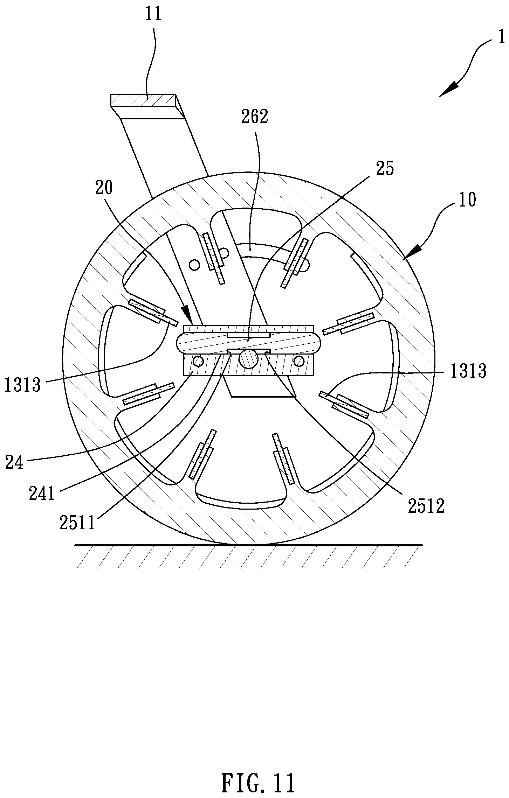

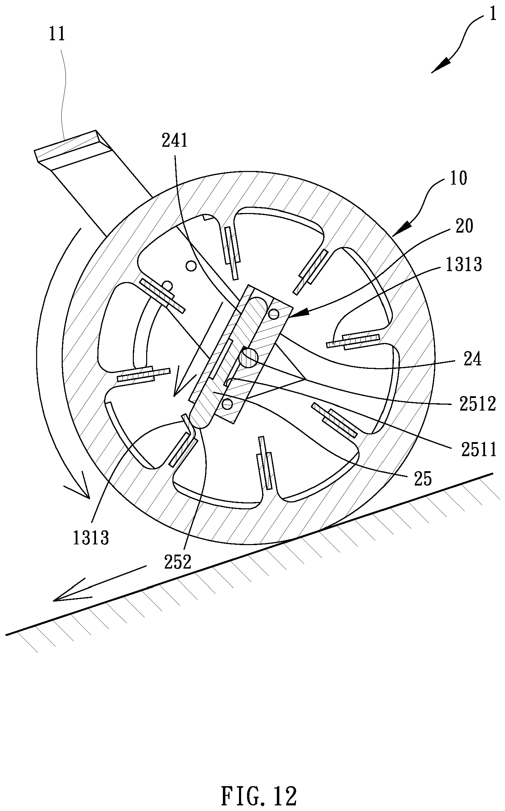

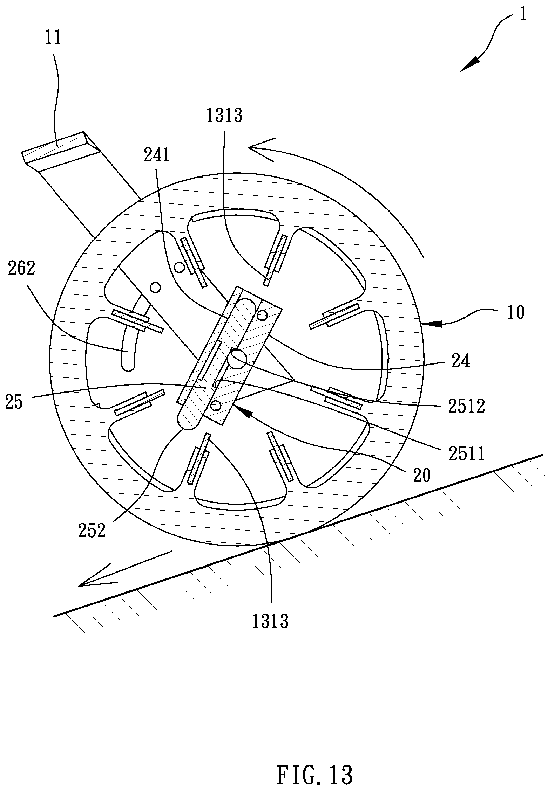

In use, the automatic speed reducing wheel **1** is able to be installed on a moving vehicle such as a wheelchair **2** (as shown by **Fig. 7****)** or a mobility aid **3** (as shown by **Fig. 8****).** When the wheelchair **2** or the mobility aid **3** move on a level ground, the blocking portion **252** of the sliding member **25** is away from the rotation route of the plurality of the elastic blockers **1313** (as shown by **Fig. 11****),** so that the wheelchair **2** or the mobility aid **3** is able to normally move. Referring to **Fig. 12** and **Fig. 13****,** when the wheelchair **2** or the mobility aid **3** moves downhill, the sliding bore **241** slants downward by an inclination angle. The sliding member **25** slides along the sliding bore **241** due to the effect of the gravity force, such that the blocking portion **252** of the sliding member **25** protrudes out of an outer side of the sliding bore **241** to interrupt the rotation route of the plurality of elastic blockers **1313,** whereby the blocking portion **252** hinders the rotation of the plurality of elastic blockers **1313** with the elastic deformation and resilience of the elastic blockers **1313,** so that the elastic blockers **1313** pass and hit the blocking portion **252** one by one and then recover, achieving a speed reducing effect.

Further, referring to **Fig. 11** to **Fig. 13****,** the position limiting groove **251** comprises a first end **2511** and a second end **2512,** and the side edge of the wheel axle **12** is engaged with the position limiting groove **251.** When the sliding bore **241** slants downward by an inclination angle, the second end **2512** of the position limiting groove **251** abuts against the side edge of the wheel axle **12,** such that the sliding member **25** is able to move within the position limiting range, preventing the sliding member **25** from being separated from the sliding bore **241.**

With the foregoing configuration, the present invention achieves following advantages.

The automatic speed reducing wheel **1** is able to be installed on a moving vehicle such as a wheelchair **2** or mobility aid **3.** When the moving vehicle moves downhill, the present invention provides an automatic speed reducing function to avoid a sudden acceleration, thereby preventing the user from injury during the downhill movement and increasing the safety of the user.

Although particular embodiments of the present invention have been described in detail for purposes of illustration, various modifications and enhancements may be made without departing from the scope of the present invention. Accordingly, the present invention is not to be limited except as by the appended claims.

## Claims

1. An automatic speed reducing wheel (1), comprising:
a wheel unit (10) having a wheel seat (11), a wheel axle (12) passing through the wheel seat (11), and a roller (13) rotating about the wheel axle (12), the wheel seat (11) comprising a through hole (1111) through which the wheel axle (12) passes, the wheel axle (12) comprising a non-circular section (121) on one end thereof, the roller (13) comprising a wheel frame (131) whose outer periphery is combined with an outer wheel (132), the wheel frame (131) comprising an axle bore (1311) passing through a center thereof, the wheel axle (12) passing through the axle bore (1311), the roller (13) being configured to freely rotate about the wheel axle (12), a plurality of blockers (1312) disposed on one side of the wheel frame (131) in adjacent to an edge thereof in a radiation shape arrangement, the plurality of blockers (1312) being configured to rotate along with the roller (13); and a speed reducing unit (20),
**characterized in that** the speed reducing unit (20) comprises a fixing seat (21) and a sliding member (22), the fixing seat (21) comprising a fixing bore (211) and a sliding bore (212), the fixing bore (211) mounted around the non-circular section (121) of the wheel axle (12) and fixed thereon, the fixing seat (21) located on one side of the roller (13), the sliding member (22) slidably disposed in the sliding bore (212), the sliding member (22) comprising a sliding body (221), the sliding body (221) comprising an elastic portion (222) connected with a front end thereof, the elastic portion (222) comprising a blocking portion (223) connected with a front end thereof; when the roller (13) moves downhill, the sliding bore (212) slants downward by an inclination angle, and the sliding member (22) slides along the sliding bore (212) due to a gravity force, such that the blocking portion (223) of the sliding member (22) protrudes out of an outer side of the sliding bore (212) to interrupt a rotation route of the blockers (1312), whereby the blockers (1312) pass and hit the blocking portion (223) one by one, such that a cooperation between the blocking portion (223) and an elasticity of the elastic portion (222) achieves a speed reducing effect.

2. The automatic speed reducing wheel (1) of claim 1, wherein the wheel seat (11) comprises two side boards (111) extending therefrom; the fixing seat (21) is disposed between the two side boards (111).

3. The automatic speed reducing wheel (1) of claim 1, wherein the sliding bore (212) is normally positioned in a horizontal arrangement.

4. The automatic speed reducing wheel (1) of claim 1, wherein the elastic portion (222) is formed in a sheet shape.

5. The automatic speed reducing wheel (1) of claim 1, wherein the speed reducing unit (20) comprises a protection cover (23); the protection cover (23) is disposed on one side of the roller (13) and covers the fixing seat (21) and the sliding member (22); the protection cover (23) comprises a combination bore (231) passing through a center thereof, such that the combination bore (231) is mounted around the non-circular section (121) and fixed thereon.

## Patentansprüche

1. Ein Rad mit automatischer Geschwindigkeitsreduzierung (1), umfassend:
eine Radeinheit (10), die einen Radsitz (11), eine durch den Radsitz (11) hindurchgehende Radachse (12) und eine sich um die Radachse (12) drehende Rolle (13), aufweist, wobei der Radsitz (11) ein Durchgangsloch (1111) aufweist, durch das die Radachse (12) hindurchgeht, und die Radachse (12) an ihrem einen Ende einen nicht kreisförmigen Abschnitt (121) aufweist, die Rolle (13) einen Radrahmen (131) umfasst, dessen Außenumfang mit einem Außenrad (132) verbunden ist, der Radrahmen (131) eine Achsbohrung (1311) umfasst, die durch dessen Zentrum hindurchgeht, die Radachse (12) durch die Achsbohrung (1311) hindurchgeht, die Rolle (13) so konfiguriert ist, dass sie sich frei um die Radachse (12) dreht, eine Vielzahl von Blockierern (1312) auf einer Seite des Radrahmens (131) in der Nähe seines Rands in einer strahlenförmigen Anordnung angeordnet ist, wobei die mehreren Blockierer (1312) so konfiguriert sind, dass sie sich zusammen mit der Rolle (13) drehen, und eine Geschwindigkeitsreduzierungseinheit (20), **dadurch gekennzeichnet, dass** die Geschwindigkeitsreduzierungseinheit (20) einen Befestigungssitz (21) und ein Gleitelement (22) umfasst, wobei der Befestigungssitz (21) eine Befestigungsbohrung (211) und eine Gleitbohrung (212) umfasst, die Befestigungsbohrung (211) um den nicht kreisförmigen Abschnitt (121) der Radachse (12) angebracht und daran befestigt ist, der Befestigungssitz (21) sich auf einer Seite der Rolle (13) befindet, das Gleitelement (22) in der Gleitbohrung (212) gleitbar angeordnet ist, das Gleitelement (22) einen Gleitkörper (221) umfasst, der Gleitkörper (221) einen elastischen Abschnitt (222), der mit seinem vorderen Ende verbunden ist, umfasst, der elastische Abschnitt (222) einen Blockierabschnitt (223), der mit seinem vorderen Ende verbunden ist, umfasst; wobei, wenn sich die Rolle (13) bergab bewegt, sich die Gleitbohrung (212) um einen Neigungswinkel nach unten neigt, und das Gleitelement (22) unter der Wirkung der Schwerkraft entlang der Gleitbohrung (212) so gleitet, dass der Blockierabschnitt (223) des Gleitelements (22) nach außen aus der Gleitbohrung (212) hervortritt, um den Rotationsweg der Blockierer (1312) zu unterbrechen, wodurch die Blockierer (1312) den Blockierabschnitt (223) einer nach dem anderen passieren und dagegen stoßen, sodass ein Zusammenwirken zwischen dem Blockierabschnitt (223) und der Elastizität des elastischen Abschnitts (222) einen geschwindigkeitsreduzierenden Effekt bewirkt.

2. Rad mit automatischer Geschwindigkeitsreduzierung (1) nach Anspruch 1, worin der Radsitz (11) zwei sich von ihm erstreckende Seitenplatten (111) umfasst; der Befestigungssitz (21) zwischen den beiden Seitenplatten (111) angeordnet ist.

3. Rad mit automatischer Geschwindigkeitsreduzierung (1) nach Anspruch 1, worin die Gleitbohrung (212) normalerweise in einer horizontalen Anordnung positioniert ist.

4. Rad mit automatischer Geschwindigkeitsreduzierung (1) nach Anspruch 1, worin der elastische Abschnitt (222) in einer Plattenform ausgebildet ist.

5. Rad mit automatischer Geschwindigkeitsreduzierung (1) nach Anspruch 1, worin die Geschwindigkeitsreduzierungseinheit (20) eine Schutzabdeckung (23) umfasst; die Schutzabdeckung (23) auf einer Seite der Rolle (13) angeordnet ist und den Befestigungssitz (21) und das Gleitelement (22) abdeckt; die Schutzabdeckung (23) eine Kombinationsbohrung (231) umfasst, die durch deren Zentrum hindurchgeht, sodass die Kombinationsbohrung (231) um den nicht kreisförmigen Abschnitt (121) angebracht und daran befestigt ist.

## Revendications

1. - Roue de réduction de vitesse automatique (1), comprenant :
une unité de roue (10) ayant un siège de roue (11), un axe de roue (12) traversant le siège de roue (11), et une roulette (13) tournant autour de l'axe de roue (12), le siège de roue (11) comprenant un trou traversant (1111) à travers lequel passe l'axe de roue (12), l'axe de roue (12) comprenant une section non-circulaire (121) à une extrémité de celui-ci, la roulette (13) comprenant un châssis de roue (131) dont la périphérie extérieure est combinée à une roue extérieure (132), le châssis de roue (131) comprenant un alésage d'axe (1311) traversant un centre de celui-ci, l'axe de roue (12) passant à travers l'alésage d'axe (1311), la roulette (13) étant configurée pour tourner librement autour de l'axe de roue (12), une pluralité d'éléments de blocage (1312) disposés sur un côté du châssis de roue (131) de manière adjacente à un bord de celui-ci en un agencement en forme de rayons, la pluralité d'éléments de blocage (1312) étant configurés pour tourner conjointement avec la roulette (13) ; et une unité de réduction de vitesse (20),
**caractérisée par le fait que** l'unité de réduction de vitesse (20) comprend un siège de fixation (21) et un élément coulissant (22), le siège de fixation (21) comprenant un alésage de fixation (211) et un alésage de coulissement (212), l'alésage de fixation (211) étant monté autour de la section non-circulaire (121) de l'axe de roue (12) et fixé sur celle-ci, le siège de fixation (21) étant situé sur un côté de la roulette (13), l'élément coulissant (22) étant disposé de manière coulissante dans l'alésage de coulissement (212), l'élément coulissant (22) comprenant un corps coulissant (221), le corps coulissant (221) comprenant une partie élastique (222) reliée à une extrémité avant de celui-ci, la partie élastique (222) comprenant une partie de blocage (223) reliée à une extrémité avant de celui-ci ; lorsque la roulette (13) se déplace en descente, l'alésage de coulissement (212) s'incline vers le bas d'un angle d'inclinaison, et l'élément coulissant (22) coulisse le long de l'alésage de coulissement (212) sous l'effet d'une force de gravité, de telle sorte que la partie de blocage (223) de l'élément coulissant (22) fait saillie hors d'un côté extérieur de l'alésage de coulissement (212) pour interrompre une trajectoire de rotation des éléments de blocage (1312), ce par quoi les éléments de blocage (1312) passent et heurtent la partie de blocage (223) un par un, de telle sorte qu'une coopération entre la partie de blocage (223) et une élasticité de la partie élastique (222) produit un effet de réduction de vitesse.

2. - Roue de réduction de vitesse automatique (1) selon la revendication 1, dans laquelle le siège de roue (11) comprend deux panneaux latéraux (111) s'étendant à partir de celui-ci ; le siège de fixation (21) étant disposé entre les deux panneaux latéraux (111).

3. - Roue de réduction de vitesse automatique (1) selon la revendication 1, dans laquelle l'alésage de coulissement (212) est normalement positionné dans un agencement horizontal.

4. - Roue de réduction de vitesse automatique (1) selon la revendication 1, dans laquelle la partie élastique (222) est formée en forme de feuille.

5. - Roue de réduction de vitesse automatique (1) selon la revendication 1, dans laquelle l'unité de réduction de vitesse (20) comprend un couvercle de protection (23) ; le couvercle de protection (23) étant disposé sur un côté de la roulette (13) et recouvrant le siège de fixation (21) et l'élément coulissant (22) ; le couvercle de protection (23) comprenant un alésage de combinaison (231) traversant un centre de celui-ci, de telle sorte que l'alésage de combinaison (231) est monté autour de la section non-circulaire (121) et fixé sur celle-ci.
